# EUROPÄISCHE PATENTSCHRIFT

(11) **EP 3 371 003 B1**
(45) Veröffentlichungstag und Bekanntmachung des Hinweises auf die Patenterteilung: **13.04.2022**
(21) Anmeldenummer: 16791026.4
(22) Anmeldetag: 04.11.2016
(51) Int. Cl.: B60N 2/821, B60N 2/829, B60N 2/853, B60N 2/865

(54) **KOPFSTÜTZE MIT VERSTELLVORRICHTUNG ZUR VERSTELLUNG EINER KOPFSTÜTZENPOSITION MIT DIREKTANTRIEB**
HEADREST WITH ADJUSTMENT DEVICE FOR ADJUSTING A HEADREST POSITION, WITH DIRECT DRIVE
APPUI-TÊTE AVEC DISPOSITIF DE RÉGLAGE POUR RÉGLAGE DE LA POSITION D'UN APPUI-TÊTE À ENTRAÎNEMENT DIRECT

(30) Priorität: 04.11.2015 DE 202015105880 U; 01.04.2016 DE 202016101749 U
(43) Veröffentlichungstag der Anmeldung: 12.09.2018
(73) Patentinhaber: Elektrosil GmbH, 22761 Hamburg (DE)
(72) Erfinder: NIEMANN, Hendrik, 21224 Rosengarten (DE)
(74) Vertreter: RGTH
(86) Internationale Anmeldenummer: PCT/EP2016/076682
(87) Internationale Veröffentlichungsnummer: WO 2017/077042

(56) Entgegenhaltungen:
- EP-A1- 0 490 341
- EP-A1- 1 089 019
- EP-A1- 2 698 277
- DE-A1- 3 306 323
- DE-A1- 4 105 157
- DE-A1-102006 013 994
- DE-A1-102009 027 155
- SU-A1- 955 375

## Beschreibung

### Technisches Gebiet

Die Erfindung betrifft eine Kopfstütze mit Verstellvorrichtung zur Verstellung einer Kopfstützenposition, wobei die Verstellvorrichtung mindestens eine als Gewindespindel ausgebildete Spindel und mindestens einen mit der Spindel in mechanischer Wirkverbindung stehenden Elektromotor aufweist.

Die Position von Kopfstützen eines Fahrzeugsitzes kann üblicherweise manuell verstellt werden. Beispielsweise kann die Kopfstütze in Bezug auf dessen Höhe angepasst werden oder die Neigung der Kopfstütze verstellt werden.

### Stand der Technik

Im Stand der Technik sind auch elektrisch verstellbare Kopfstützen bekannt. Hierfür ist ein elektrischer Antrieb in der Rückenlehne eines Fahrzeugsitzes angebracht. Mittels entsprechender Bedienelemente kann der Benutzer den elektrischen Antrieb ansteuern und die Kopfstützenposition verändern, beispielsweise die Höhe der Kopfstütze anpassen.

In der EP 2 698 277 A1 wird eine Kopfstütze mit einer Verstellvorrichtung zur Verstellung einer Kopfstützenposition beschrieben. Verschiedene Verstellvorrichtungen mit direkt antreibenden Elektromotoren sind aus EP 0 490 341 A1, DE 10 2009 027155 A1, DE 33 06 323 A1, EP 1 089 019 A1, DE 41 05 157 A1 und SU 955 375 A1 bekannt.

### Darstellung der Erfindung: Aufgabe, Lösung, Vorteile

Aufgabe der vorliegenden Erfindung ist es, eine Kopfstütze mit Verstellvorrichtung zur elektrischen Verstellung einer Kopfstützenposition derart zu verbessern, dass die gesamte Verstellvorrichtung innerhalb der Kopfstütze angeordnet werden kann um somit die Verstellvorrichtung kostengünstiger und zuverlässiger auszugestalten.

Erfindungsgemäß wird hierfür eine Kopfstütze mit Verstellvorrichtung nach Anspruch 1 vorgeschlagen. Die Verstellvorrichtung weist mindestens eine als Gewindespindel ausgebildete Spindel und mindestens einen mit der Spindel in mechanischer Wirkverbindung stehenden Elektromotor auf. Erfindungsgemäß ist der Elektromotor relativ zur Spindel beweglich angeordnet. Hierfür ist der Elektromotor derart angeordnet, dass eine rotatorische Bewegung eines Rotors des Elektromotors eine translatorische Bewegung des Elektromotors entlang der Spindel bewirkt. Alternativer Weise kann die Spindel relativ zum Elektromotor beweglich angeordnet sein. Dabei bewirkt eine rotatorische Bewegung eines Rotors des Elektromotors eine translatorische Bewegung der Spindel, also eine Bewegung der Spindel relativ zum Elektromotor.

Die Verstellvorrichtung kann beispielsweise zur Höhenverstellung der Kopfstütze und/oder Verstellung einer anderen Position, beispielsweise der Neigung der Kopfstütze, vorgesehen sein. Die Verstellvorrichtung ist zur Verstellung einer Kopfstützenposition der erfindungsgemäßen Kopfstütze für ein Fahrzeug, beispielsweise einen PKW, vorgesehen.

Dadurch, dass der Elektromotor selbst in eine translatorische Bewegung entlang der Spindel, das heißt linear entlang der Spindel, bewegbar ist, kann in besonders einfacher Weise die Kopfstütze in derselben Richtung bewegt bzw. verstellt werden. Die Verstellvorrichtung einschließlich des Antriebs, nämlich des Elektromotors, ist hierfür in der Kopfstütze selbst angeordnet. Durch feste bzw. starre Verbindung des Elektromotors mit der Kopfstütze wird die Kopfstütze selbst zusammen mit dem Elektromotor bewegt. Ist dagegen die Spindel relativ zum Elektromotor beweglich angeordnet, ist die Spindel innerhalb der Kopfstütze fest und starr mit dieser verbunden.

Im Vergleich zum Stand der Technik müssen viel geringere Kräfte zur Verstellung der Kopfstützenposition aufgebracht werden. Bei im Stand der Technik bekannten Verstellvorrichtungen ist der Antrieb in der Rückenlehne eines Fahrzeugsitzes angebracht. Zur Verstellung der Höhenposition einer Kopfstütze müssen mittels des in der Rückenlehne angebrachten Antriebs hohe Kräfte aufgewendet werden, um Verbindungsmittel zwischen Rückenlehne und Kopfstütze zu betätigen und somit die Kopfstütze selbst in ihrer Höhe zu verstellen. Eine Verstellung einer weiteren Position, beispielsweise der Neigung, ist ebenfalls sehr umständlich und schwierig zu erreichen.

Erfindungsgemäß ist der Elektromotor relativ beweglich zur Spindel derart angeordnet, dass die rotatorische Bewegung des Rotors in eine translatorische Bewegung des Elektromotors selbst entlang der Spindel umgewandelt wird, sodass nicht Verbindungsmittel zwischen Rückenlehne und Kopfstütze betätigt werden müssen, sondern die Kopfstütze selbst zusammen mit der Bewegung des Elektromotors bewegt bzw. verstellt wird.

Unter einer Gewindespindel ist eine Gewindestange zu verstehen. Die als Gewindespindel ausgebildete Spindel besteht im Wesentlichen aus einem zylindrischen Rundstab, auf dem ein Außengewinde, zum Beispiel ein Trapez-, Rund-, Säge-, Spitz- oder Flachgewinde aufgebracht ist. Der Elektromotor weist einen Stator und einen Rotor auf. Die rotatorische Bewegung des Rotors wird direkt in eine translatorische Bewegung des gesamten Elektromotors, das heißt des Rotors und Stators, entlang der Spindel umgewandelt. Hierfür steht der Elektromotor in mechanischer Wirkverbindung mit der Spindel.

Die Verstellvorrichtung ist platzsparend im Vergleich zu aus dem Stand der Technik bekannten Vorrichtungen und ist in der erfindungsgemäßen Kopfstütze selbst angeordnet. Des Weiteren hat die erfindungsgemäße Kopfstütze den Vorteil, dass der Antrieb im Vergleich zu aus dem Stand der Technik bekannten Antrieben für Kopfstützen weitaus geräuschärmer ist, da viel geringere Kräfte zur Verstellung der Kopfstützenposition aufgewandt werden müssen und insbesondere keine mechanischen Verbindungsmittel zwischen Rückenlehne und der Kopfstütze selbst bewegt werden müssen. Der Elektromotor kann innerhalb der Kopfstütze mit dieser fest verbunden sein, sodass die gesamte Kopfstütze durch die Bewegung des Elektromotors translatorisch entlang der Spindel bewegt wird.

Erfindungsgemäß ist der Rotor um die Spindel herum angeordnet. Hierdurch kann eine noch kompaktere Anordnung der Verstellvorrichtung erreicht werden. Ferner sind bei Anordnung des Rotors um die Spindel herum erfindungsgemäß keine zusätzlichen Maschinenelemente, beispielsweise ein über eine Welle mit dem Rotor des Elektromotors verbundenes Zahnrad, notwendig. Die Krafteinbringung kann direkt vom Rotor auf die Spindel erfolgen. Somit wird erfindungsgemäß ein Direktantrieb für die Verstellvorrichtung der Kopfstützenposition vorgeschlagen.

Der Elektromotor kann mit relativ geringer Geschwindigkeit betrieben werden. Beispielsweise kann der Elektromotor mit einer Geschwindigkeit zwischen 100 und 500, besonders bevorzugterweise zwischen 200 und 400, beispielsweise 300, Umdrehungen pro Minute betrieben werden. Ferner ist keine zusätzliche Schwingungsentkopplung des Elektromotors notwendig. Die gesamte Anordnung ist sehr präzise und robust, da der Rotor erfindungsgemäß um die Spindel herum angeordnet wird und nicht etwa zusätzliche Maschinenelemente zum Antrieb neben der Spindel vorgesehen sein müssen. Auf die Kopfstütze einwirkende Kräfte verändern die Anordnung des Elektromotors relativ zur Spindel innerhalb der Kopfstütze somit nicht oder nur minimal.

Erfindungsgemäß ist auch ein Stator des Elektromotors um die Spindel herum angeordnet.

Bevorzugterweise weist das Außengewinde der Spindel eine relativ geringe Steigung auf. Bevorzugterweise beträgt die Steigung des Außengewindes der Spindel weniger als 1,0 mm, besonders bevorzugterweise weniger als 0,8 mm, sowie ganz besonders bevorzugterweise weniger als 0,6 mm. Beispielsweise könnte die Steigung des Außengewindes der Spindel 0,5 mm betragen. Die Steigung ist gemäß der Erfindung in Bezug auf ein metrisches Gewinde zu verstehen. Unter der Steigung ist somit der Abstand zwischen zwei nebeneinander angeordneten Gewindespitzen bzw. Flanken des Außengewindes der Spindel zu verstehen. Somit entspricht die Steigung dem Weg, den der Elektromotor in linearer Richtung entlang der Spindel bei einer vollständigen Umdrehung des Rotors um die Spindel herum zurücklegt.

Der Elektromotor weist bevorzugterweise ein Gehäuse mit Befestigungsmitteln zur Befestigung des Elektromotors mit der Kopfstütze auf. Über das Gehäuse wird der Elektromotor fest, beispielsweise starr, im Inneren der Kopfstütze mit dieser verbunden. Ein derartiges Befestigungsmittel kann beispielsweise als Flansch ausgebildet sein. Dieser kann umfangsseitig abstehend vom Gehäuse angeordnet sein und eine Bohrung zur Aufnahme einer Schraubverbindung aufweisen.

Des Weiteren ist bevorzugterweise vorgesehen, dass der Stator des Elektromotors auf einer Leiterplatte des Elektromotors angeordnet ist. Die Leiterplatte dient zur Befestigung des Stators. Der Stator kann zusammen mit der Leiterplatte in das Gehäuse eingesetzt werden. Somit ist bevorzugterweise vorgesehen, dass das Gehäuse auch die Leiterplatte vollumfänglich umschließt. Über die Leiterplatte kann der Stator beispielsweise im Gehäuse befestigt werden. Des Weiteren dient die Leiterplatte zum Verschalten einzelner Wicklungen des Stators. Besonders bevorzugterweise ist die Leiterplatte im Wesentlichen rund ausgebildet und/oder weist einen Außendurchmesser auf, welcher kleiner oder gleich dem Außendurchmesser des Stators selbst ist.

Bevorzugterweise weist der Elektromotor mindestens vier, besonders bevorzugterweise mindestens sechs, sowie ganz besonders bevorzugterweise mindestens acht Pole auf. Beispielsweise kann der Elektromotor 10 oder 12 Pole aufweisen. Durch das Vorsehen einer relativ hohen Polzahl kann das Drehmoment des Elektromotors erhöht und die Verfahrzeit des Elektromotors in linearer bzw. translatorischer Richtung entlang der Spindel beschleunigt werden.

Bevorzugterweise weist die Spindel eine Länge von mindestens 10 cm, besonders bevorzugterweise von mindestens 12 cm, sowie ganz besonders bevorzugterweise von mindestens 15 cm auf. Hierdurch kann ein Verstellweg, insbesondere für eine geeignete Höhenverstellung, der Kopfstütze vorgesehen werden.

Die Spindel weist bevorzugterweise Kunststoff, besonders bevorzugterweise einen thermoplastischen Kunststoff, sowie ganz besonders bevorzugterweise Polyoxymethylen (POM), auf oder besteht daraus.

Auch ist bevorzugterweise vorgesehen, dass zur weiteren Geräuschreduzierung auf der Innenseite des Gehäuses des Elektromotors ein Dämmmittel zur Geräuschdämmung angeordnet ist. Beispielsweise könnte auf der Innenseite des Gehäuses von dem Elektromotor ein Dämmmittel flächig angeordnet, beispielsweise aufgeklebt, sein.

Die Verstellvorrichtung weist ferner bevorzugterweise eine Steuereinheit auf, wobei die Steuereinheit und der Elektromotor derart ausgebildet sind, dass eine vollständige Umdrehung des Rotors durch eine Anzahl von zwischen 6 und 18 Impulsen erreicht wird. Hierdurch kann der Elektromotor in linearer bzw. translatorischer Richtung entlang der Spindel in besonders feinen bzw. kleinen Schritten bewegt werden.

Zur Positionserfassung des Elektromotors und/oder des Rotors weist der Elektromotor bevorzugterweise mindestens einen Hall-Sensor, sowie besonders bevorzugterweise höchstens drei Hall-Sensoren, auf. Durch den mindestens einen Hall-Sensor kann die Position des Rotors bzw. des Rotormagnets im Elektromotor erfasst werden. Zur Positionserfassung steht der mindestens eine Hall-Sensor somit mit dem Rotormagneten selbst in direkter Wirkverbindung. Es sind keine zusätzlichen Bauteile, zum Beispiel zusätzliche Magnete, zur Positionserfassung erforderlich. Die Abtastung ist bevorzugterweise in axialer Richtung vorgesehen.

Des Weiteren ist bevorzugterweise vorgesehen, dass der Stator des Elektromotors sowie auch der mindestens eine Hall-Sensor auf der Leiterplatte des Elektromotors angeordnet sind. Für die Abtastung ist in der Leiterplatte besonders bevorzugterweise eine Aussparung vorgesehen.

Erfindungsgemäß ist der Rotor fest mit einer Spindelmutter verbunden, wobei die Spindelmutter ein in ein Außengewinde der Spindel eingreifendes Innengewinde aufweist.

Die mechanische Wirkverbindung zwischen Elektromotor und Spindel wird damit durch eine mit dem Rotor fest verbundene Spindelmutter erreicht. Unter "fest verbunden" ist im Sinne der vorliegenden Erfindung zu verstehen, dass die Spindelmutter derart mit dem Rotor verbunden ist, dass diese der Drehbewegung des Rotors folgt. Der Rotor versetzt die Spindelmutter somit in Drehbewegung. Dabei ist die Spindelmutter über ein weiteres mit dem Rotor fest verbundenes Maschinenelement, erfindungsgemäß eine Glocke, direkt mit dem Rotor fest verbunden.

Unter einer Spindelmutter ist im Sinne dieser Erfindung eine Mutter oder ein hülsenförmiges Maschinenelement zu verstehen, welche bzw. welches ein Innengewinde aufweist und auf die Spindel bzw. das Außengewinde der Spindel aufgeschraubt ist.

Auch ist bevorzugterweise vorgesehen, dass der Elektromotor als bürstenloser Motor ausgebildet ist. Der Elektromotor ist erfindungsgemäß als Außenläufermotor, also mit einem um den Stator herum angeordneten Rotor, ausgebildet. Zwischen dem Rotor und dem Stator ist vollumfänglich ein Luftspalt angeordnet. Somit sind bevorzugterweise keine physischen Verbindungen, zum Beispiel keine Schleifkontakte, zwischen Rotor und Stator vorgesehen. Hierdurch wird eine besonders verschleißarme und geräuscharme Antriebsvorrichtung bereitgestellt. Des Weiteren können die Schwingungen möglichst gering gehalten werden.

Der Elektromotor weist bevorzugterweise ein Gehäuse auf, welches fest mit dem Stator und/oder der Leiterplatte verbunden ist. Das Gehäuse umschließt den Stator und den Rotor bevorzugterweise vollständig. Das Gehäuse kann die Spindelmutter ebenfalls vollumfänglich umschließen, wobei die Spindelmutter nicht zwingend vollständig innerhalb des Gehäuses angeordnet sein muss. Beispielsweise kann die Spindelmutter stirnseitig aus dem Gehäuse herausragen. Die Spindelmutter kann somit eine größere Länge im Vergleich zur Höhe beziehungsweise Länge des Elektromotors bzw. des Gehäuses des Elektromotors aufweisen und/oder in Längsrichtung an den Stator und/oder Rotor anschließen.

Die Spindelmutter weist bevorzugterweise ebenfalls Kunststoff, bevorzugterweise einen thermoplastischen Kunststoff, sowie ganz besonders bevorzugterweise Polyoxymethylen (POM), auf oder besteht daraus.

Besonders bevorzugterweise ist sowohl die Spindel sowie auch die um die Spindel herum angeordnete Spindelmutter aus Kunststoff ausgebildet. Dadurch kann eine besonders starke Geräuschreduzierung erreicht werden.

Des Weiteren ist erfindungsgemäß um den Rotor herum ein Maschinenelement, in Form einer Glocke, angeordnet, wobei das Maschinenelement fest mit dem Rotor verbunden ist. Beispielsweise kann der Rotor in die Glocke eingeklebt oder eingepresst sein. Die Glocke ist somit derart mit dem Rotor verbunden, dass sich die Glocke zusammen mit dem Rotor dreht. Die Glocke weist bevorzugter Weise die Form eines offenen Hohlzylinders auf. Die Glocke umschließt umfänglich den Rotor und den Stator.

Die Glocke ist erfindungsgemäß fest mit der Spindelmutter verbunden oder einstückig mit der Spindelmutter ausgebildet. Somit wird die Drehbewegung vom Rotor über die Glocke auf die Spindelmutter übertragen.

Die Glocke weist bevorzugterweise einen ersten Außendurchmesser auf. Die Spindelmutter weist bevorzugterweise einen zweiten Außendurchmesser auf. Der zweite Außendurchmesser ist bevorzugterweise über eine gesamte Länge der Spindelmutter kleiner als der erste Außendurchmesser. Hierunter ist zu verstehen, dass der Außendurchmesser der Spindelmutter in jedem Bereich kleiner als der Außendurchmesser der Glocke ist.

Auch ist bevorzugterweise vorgesehen, dass der erste Außendurchmesser maximal 40 mm, besonders bevorzugterweise maximal 35 mm, sowie ganz besonders bevorzugterweise maximal 30 mm, beträgt. Beispielsweise kann der erste Außendurchmesser 25 mm betragen. Hierunter ist zu verstehen, dass der Außendurchmesser der Glocke in keinem Bereich die vorgenannten bevorzugten Werte übersteigt.

Die Glocke weist bevorzugterweise Kunststoff, insbesondere einen thermoplastischen Kunststoff, auf oder besteht daraus.

Ferner weist die Spindelmutter bevorzugterweise einen Endabschnitt ohne Innengewinde auf. Hierunter ist zu verstehen, dass in einem Endabschnitt über eine vordefinierte Länge kein Innengewinde in der Spindelmutter angeordnet ist. Über diesen Endabschnitt umschließt die Spindelmutter die Spindel ohne dabei in das Außengewinde auf der Spindel einzugreifen.

Der Endabschnitt ohne Innengewinde weist bevorzugterweise eine Länge auf, welche mindestens 10 %, besonders bevorzugterweise mindestens 20 %, der Gesamtlänge der Spindelmutter entspricht.

Des Weiteren ist erfindungsgemäß mindestens ein Lager, bevorzugterweise zwei zueinander beanstandet angeordnete Lager, vorgesehen. Mit dem mindestens einen Lager wird der Elektromotor und/oder Stator auf der Spindel bzw. dem Außengewinde der Spindel gelagert bzw. geführt. Der Stator umschließt dabei bevorzugterweise umfänglich mindestens ein Lager. Das mindestens eine Lager ist bevorzugterweise fest mit dem Stator und/oder der Leiterplatte verbunden. Besonders bevorzugter Weise ist das mindestens eine Lager als Gleitlager und somit nicht als Kugellager ausgebildet.

Die Verstellvorrichtung kann eine weitere als Gewindespindel ausgebildete Spindel und einen mit der weiteren Spindel in mechanischer Wirkverbindung stehenden weiteren Elektromotor aufweisen. Dabei ist vorgesehen, dass beide Spindeln identisch ausgebildet und identisch ausgerichtet sind. Besonders bevorzugterweise sind beide Spindeln parallel zueinander angeordnet. Durch das Vorsehen von mehr als einer Spindel kann eine bessere Stabilität der Verstellvorrichtung für eine Kopfstütze erreicht werden.

Sowohl die weitere Spindel sowie auch der weitere Elektromotor können die vorbeschriebenen Merkmale einer Spindel bzw. eines Elektromotors aufweisen.

Die Verstellvorrichtung ist innerhalb, bevorzugterweise vollständig innerhalb, der Kopfstütze angeordnet. Der Elektromotor der Verstellvorrichtung ist über dessen Gehäuse fest, beispielsweise starr, mit der Kopfstütze verbunden. Die Kopfstütze folgt somit der Bewegung des Elektromotors in linearer bzw. translatorischer Richtung entlang der Spindel. Die gesamte Kopfstütze ist somit wie auch der Elektromotor relativ zur Spindel beweglich. Die Spindel selbst kann mit Verbindungsmitteln zwischen der Kopfstütze und einer Rückenlehne des Fahrzeugsitzes verbunden bzw. an diesen gelagert sein, sodass die Spindel nicht zusammen mit der Kopfstütze und dem Elektromotor der Verstellvorrichtung bewegt wird. Die Spindel ist somit bevorzugterweise innerhalb der Kopfstütze angeordnet, aber starr mit einer Lehne des Fahrzeugsitzes verbunden. Die elektrischen Leitungen zur Stromversorgung und Ansteuerung der Verstellvorrichtung können durch Verbindungsmittel zwischen Kopfstütze und Lehne des Fahrzeugsitzes hindurchgeführt werden. Hierfür können die Verbindungsmittel insbesondere als Rohre bzw. rohrförmig ausgebildet sein.

Des Weiteren ist bevorzugterweise eine Kopfstütze vorgesehen, wobei die Verstellvorrichtung zur Höhenverstellung der Kopfstütze und/oder zur Verstellung einer Neigung der Kopfstütze und/oder zur Bewegung eines in der Kopfstütze angeordneten Elementes ausgebildet ist. Ein in der Kopfstütze angeordnetes Element kann beispielsweise in Form eines Polsters oder einer Platte im vorderen Bereich der Kopfstütze vorgesehen sein. Durch die Bewegung, beispielsweise das nach vorne Drücken oder Zurückziehen dieses in der Kopfstütze angeordneten Elements, kann für den Benutzer die gefühlte Position bzw. Neigungsstellung der Kopfstütze verändert werden. Dadurch ist es nicht notwendig, die Neigung der gesamten Kopfstütze tatsächlich zu verändern, sondern lediglich die vordere Anlagefläche der Kopfstütze weiter nach vorne zu drücken oder zurückzubewegen.

Auch ist bevorzugterweise eine Kopfstütze mit mindestens zwei Verstellvorrichtungen vorgesehen, wobei die erste Verstellvorrichtung zur Höhenverstellung der Kopfstütze innerhalb dieser angeordnet ist und wobei die zweite Verstellvorrichtung zur Verstellung einer Neigung der Kopfstütze und/oder zur Bewegung eines in der Kopfstütze angeordneten Elements innerhalb der Kopfstütze angeordnet ist. Hierdurch kann eine Kopfstütze bereitgestellt werden, welche sowohl in Bezug auf dessen Höhe sowie auch in Bezug auf dessen Neigung oder gefühlten Neigung verstellt werden kann. Beide Verstellvorrichtungen sind bevorzugterweise vollständig innerhalb der Kopfstütze angeordnet.

Zusätzlich könnte innerhalb der Kopfstütze ein Heizmodul zur Ausbildung einer Nackenheizung angeordnet sein.

### Kurze Beschreibung der Zeichnungen

Die Erfindung wird nun in Bezug auf die begleitenden Zeichnungen erläutert.

Es zeigen schematisch:
- Fig. 1:: eine perspektivische Ansicht einer Verstellvorrichtung zur Verstellung einer Kopfstützenposition,
- Fig. 2:: eine perspektivische Ansicht einer Verstellvorrichtung ohne Gehäuse,
- Fig. 3:: eine Schnittdarstellung durch einen Ausschnitt einer Verstellvorrichtung zur Verstellung einer Kopfstützenposition,
- Fig. 4:: eine perspektivische Ansicht einer Verstellvorrichtung ohne Gehäuse,
- Fig. 5:: eine perspektivische Ansicht einer Verstellvorrichtung ohne Gehäuse,
- Fig. 6:: eine Schnittdarstellung durch einen Ausschnitt einer Verstellvorrichtung zur Verstellung einer Kopfstützenposition,
- Fig. 7:: eine Kopfstütze eines Fahrzeugsitzes mit Verstellvorrichtung zur Höhenverstellung der Kopfstütze, und
- Fig. 8:: eine Kopfstütze mit Verstellvorrichtung zur Betätigung eines in der Kopfstütze angeordneten Elements.

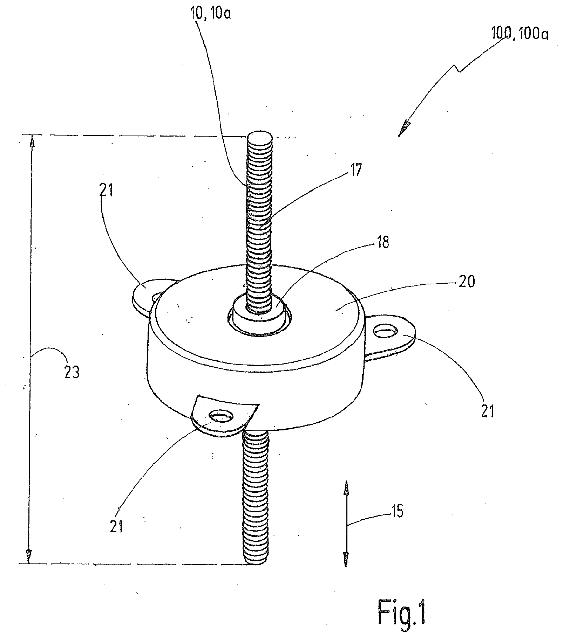

Figur 1 zeigt eine perspektivische Ansicht zur beispielhaften Erläuterung einer Verstellvorrichtung 100, 100a zur

Verstellung einer Kopfstützenposition. Die Verstellvorrichtung 100, 100a weist eine als Gewindespindel ausgebildete Spindel 10, 10a und einen mit der Spindel 10, 10a in mechanischer Wirkverbindung stehenden Elektromotor 11, 11a auf. Der Elektromotor 11, 11a ist in einem Gehäuse 20 angeordnet. Der Elektromotor 11, 11a ist zur Spindel 10, 10a relativ beweglich angeordnet, derart, dass eine rotatorische Bewegung 14 des Rotors 12 (in Figur 1 nicht gezeigt) des Elektromotors 11, 11a eine translatorische Bewegung 15 des Elektromotors 11, 11a entlang der Spindel 10, 10a bewirkt.

Mittels der umfänglich am Gehäuse 20 des Elektromotors 11, 11a angeordneten Befestigungsmittel 21 kann der Elektromotor 11, 11a über dessen Gehäuse 20 innerhalb einer Kopfstütze 200 (in Figur 1 nicht gezeigt) fest mit dieser verbunden werden. Die Kopfstütze 200 folgt somit der Bewegung des Elektromotors 11, 11a bzw. wird zusammen mit dem Elektromotor 11, 11a in linearer bzw. translatorischer Richtung entlang der Spindel 10, 10a bewegt.

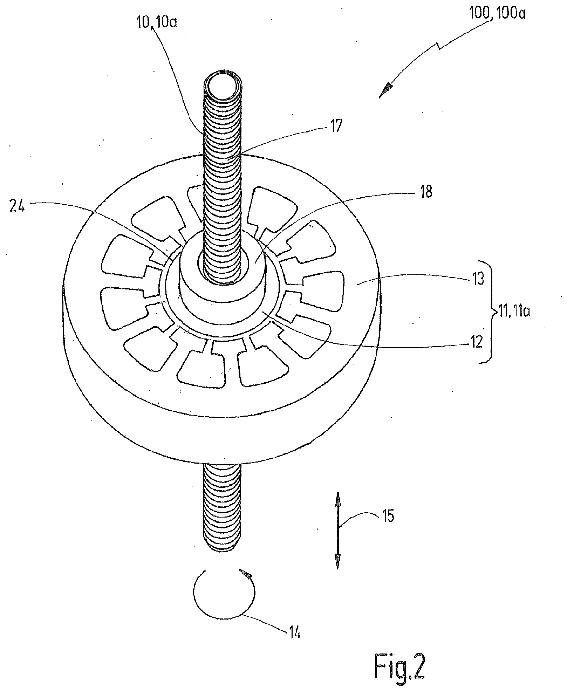

Figur 2 zeigt beispielhaft eine perspektivische Ansicht der Verstellvorrichtung 100, 100a, wobei der besseren Übersicht halber das Gehäuse 20 des Elektromotors 11, 11a entfernt wurde. Der Elektromotor 11, 11a weist einen Stator 13 mit einer Vielzahl von Polen auf. Der Stator 13 umschließt umfänglich einen Rotor 12, welcher als Dauermagnet ausgebildet ist oder mindestens einen Dauermagneten aufweist. Der Elektromotor 11, 11a ist als bürstenloser Elektromotor 11, 11a ausgebildet. Das bedeutet, dass keine mechanischen Kontakte, beispielsweise Schleifkontakte, zwischen dem Stator 13 und dem Rotor 12 des Elektromotors 11, 11a vorgesehen sind. Zwischen dem Stator 13 und dem Rotor 12 ist somit vollumfänglich ein Luftspalt 24 vorgesehen.

Sowohl der Rotor 12 sowie auch der Stator 13 sind um die Spindel 10, 10a herum angeordnet. Der Rotor 12 umschließt vollumfänglich eine Spindelmutter 18. Die Spindelmutter 18 weist zumindest bereichsweise ein Innengewinde 16 (in Figur 2 nicht gezeigt) auf, welches in das Außengewinde 17 der Spindel 10, 10a eingreift. Die Spindelmutter 18 ist fest mit dem Rotor 12 verbunden, sodass die rotatorische Bewegung 14 bzw. Drehbewegung des Rotors 12 auf die Spindelmutter 18 übertragen wird. Diese rotatorische Bewegung 14 des Rotors wird somit über die Spindelmutter 18 auf die Spindel 10, 10a übertragen und in eine translatorische Bewegung 15 des gesamten Elektromotors 11, 11a entlang der Spindel 10, 10a umgewandelt.

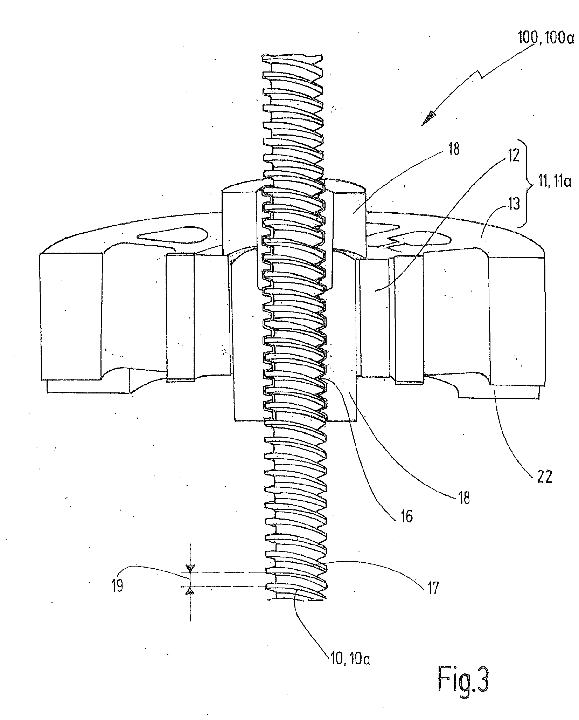

In Figur 3 ist beispielhaft ein Ausschnitt der Verstellvorrichtung 100, 100a in Schnittdarstellung gezeigt. Hieraus geht deutlich hervor, dass die Spindelmutter 18 bereichsweise ein Innengewinde 16 aufweist, welches in das Außengewinde 17 der Spindel 10, 10a eingreift.

Die Steigung 19 des Außengewindes 17 ist besonders klein gewählt, sodass eine kleine Übersetzung gegeben ist und der Elektromotor 11, 11a und somit auch die gesamte Kopfstütze 200 (in Figur 3 nicht gezeigt) in kleinen Schritten verstellt werden kann. Die Steigung 19 des Außengewindes 17 beträgt beispielsweise 0,5 mm.

Figuren 1 - 3 dienen lediglich der beispielhaften Erläuterung.

Bei der in den Figuren 1-3 gezeigten Verstellvorrichtung 100, 100a ist der Elektromotor 11, 11a als Innenläufermotor ausgebildet. Der Stator 13 ist somit um den Rotor 12 herum angeordnet. Der Rotor 12 sitzt entweder mit dessen Innengewinde 16 auf der Spindel 10, 10a oder ist über eine Spindelmutter 18 mit einem Innengewinde 16 auf der Spindel 10, 10a angeordnet.

### Bevorzugte Auführungsform der Erfindung

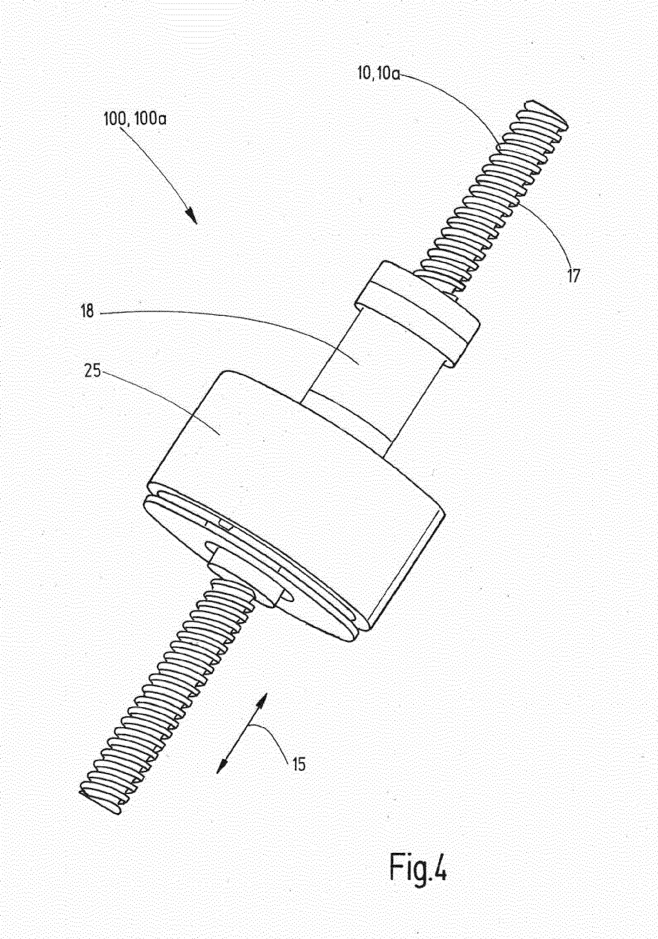

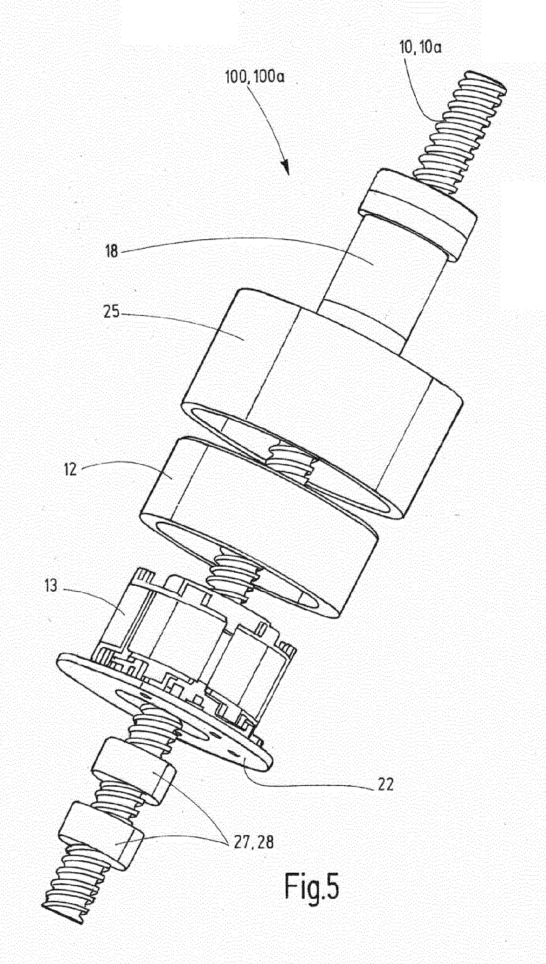

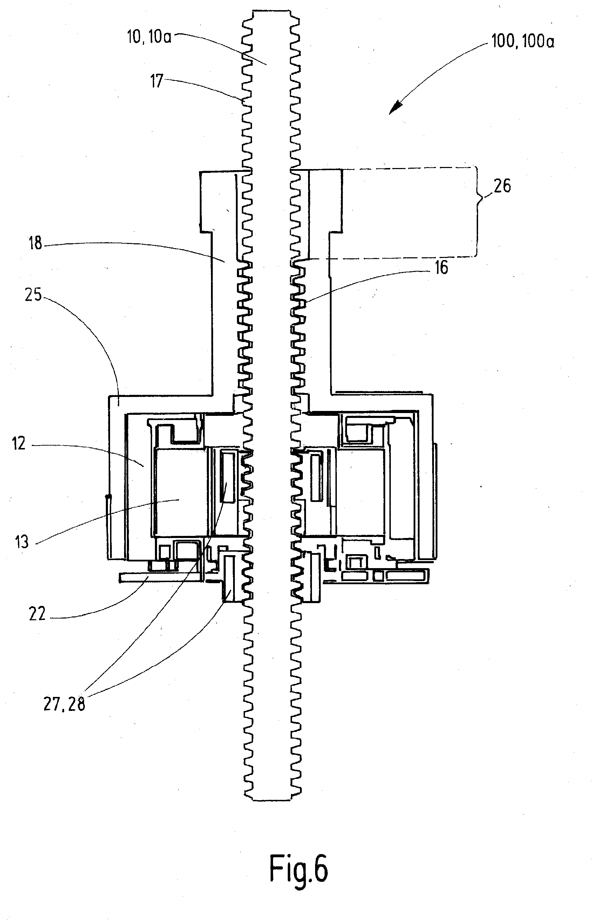

Figuren 4 und 5 zeigen weitere perspektivische Ansichten einer Verstellvorrichtung 100, 100a zur Höhenverstellung einer Kopfstütze 200 (in den Figuren nicht dargestellt). Figur 6 zeigt eine Schnittdarstellung durch eine Verstellvorrichtung 100, 100a. In den Figuren 4-6 ist eine Verstellvorrichtung 100, 100a gezeigt, wobei der Elektromotor 11, 11a als Außenläufermotor ausgebildet ist. Dabei ist der Rotor 12 um den Stator 13 herum angeordnet.

Der Stator 13 bzw. der gesamte Elektromotor 11, 11a ist mittels zwei beanstandet zueinander angeordneter Lager 27, 28 auf der Spindel 10, 10a gelagert. Die beiden Lager 27, 28 sind dabei als Gleitlager ausgebildet.

Der Rotor 12 ist in eine Glocke 25 eingepresst oder eingeklebt und somit fest mit dieser verbunden. Die Glocke 25 ist einstückig mit der Spindelmutter 18 ausgebildet. Somit wird die Rotationsbewegung des Rotors 12 über die Glocke 25 auf die Spindelmutter 18 übertragen. Die Glocke 25 wird zusammen mit der Spindelmutter 18 mit dem Rotor 12 mitgedreht.

Die Spindelmutter 18 weist ein Innengewinde 16 auf, welches in das Außengewinde 17 der Spindel 10, 10a eingreift. Ein Endabschnitt 26 der Spindelmutter 18 ist dabei ohne Innengewinde 16 ausgebildet.

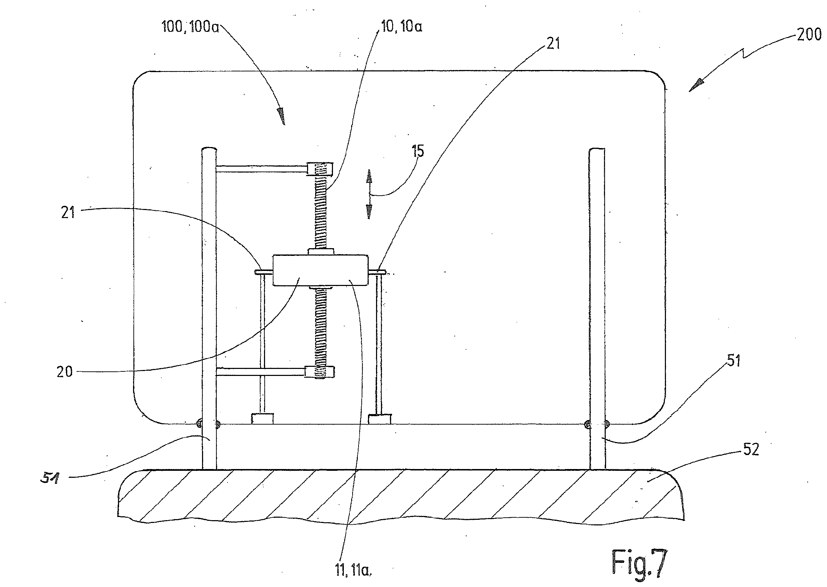

Figur 7 zeigt eine Kopfstütze 200 mit einer darin angeordneten Verstellvorrichtung 100, 100a zur Höhenverstellung der Kopfstütze 200. Die Kopfstütze 200 ist über zwei Verbindungsmittel 51 mit der Lehne 52 des Fahrzeugsitzes verbunden.

Durch die lineare bzw. translatorische Bewegung 15 entlang der Spindel 10, 10a des Elektromotors 11, 11a bzw. der gesamten Kopfstütze 200 wird die Höhenposition der Kopfstütze 200 verändert. Hierfür ist der Elektromotor 11, 11a über dessen Gehäuse 20 im Inneren der Kopfstütze 200 fest mit dieser verbunden. Die Kopfstütze 200 folgt somit der translatorischen Bewegungsrichtung 15 des gesamten Elektromotors 11, 11a. Die Spindel 10, 10a ist mit einem Verbindungsmittel 51 zwischen der Kopfstütze 200 und der Lehne 52 des Fahrzeugsitzes verbunden, sodass die Spindel 10, 10a beim Verstellen der Kopfstütze 200 keiner Bewegung folgt.

Die Kopfstütze 200 kann zwei wie in Figur 4 gezeigte Verstellvorrichtungen 100, 100a aufweisen. Beispielsweise könnte im Bereich jedes der beiden Verbindungsmittel 51 zwischen Kopfstütze 200 und der Lehne 52 des Fahrzeugsitzes eine Verstellvorrichtung 100, 100a angeordnet sein.

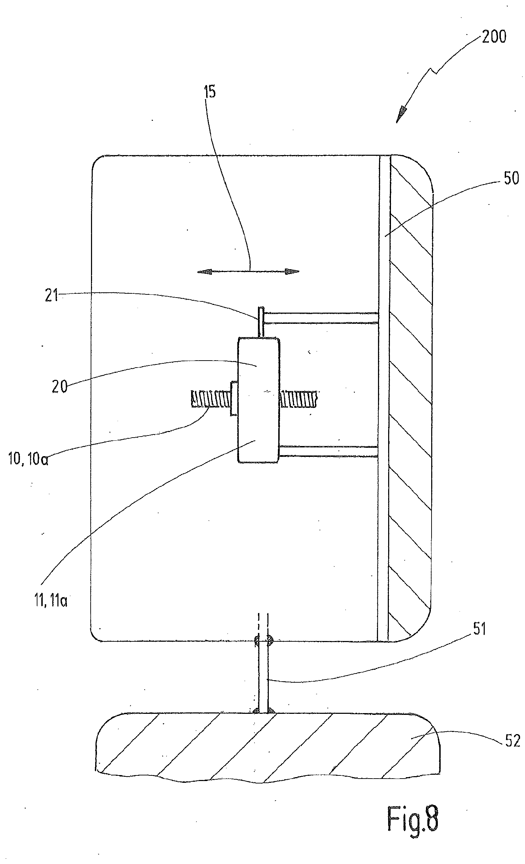

In Figur 8 ist eine Kopfstütze 200 mit darin angeordneter Verstellvorrichtung 100, 100a gezeigt. Im Gegensatz zur in der Figur 7 gezeigten Ausführungsform dient die in Figur 8 gezeigte Ausführungsform der Betätigung bzw. Bewegung eines Elements 50 innerhalb der Kopfstütze 200. Hierdurch wird die Position der Kopfstütze 200 in vertikaler Richtung verändert, dadurch, dass das innerhalb der Kopfstütze 200 angeordnete im Wesentlichen flächig ausgebildete Element 50 nach außen gedrückt wird und somit die Kopfstütze 200 verbreitert oder das Element 50 zurückgezogen wird. Für den Benutzer wird somit zumindest gefühlsmäßig die Neigung der Kopfstütze 200 verändert.

In einer Kopfstütze 200 können auch mehrere Verstellvorrichtungen 100, 100a vorgesehen sein. Beispielsweise kann in einer Kopfstütze 200 eine Verstellvorrichtung 100 zur Höhenverstellung, wie in Figur 7 gezeigt, sowie auch eine weitere Verstellvorrichtung 100a zur Betätigung des innerhalb der Kopfstütze 200 angeordneten Elements 50 angeordnet sein.

### Bezugszeichenliste

- 100, 100a: Verstellvorrichtung
- 200: Kopfstütze

- 10, 10a: Spindel
- 11, 11a: Elektromotor
- 12: Rotor
- 13: Stator
- 14: Rotatorische Bewegung
- 15: Translatorische Bewegung
- 16: Innengewinde
- 17: Außengewinde
- 18: Spindelmutter
- 19: Steigung des Außengewindes
- 20: Gehäuse
- 21: Befestigungsmittel
- 22: Leiterplatte
- 23: Länge der Spindel
- 24: Luftspalt
- 25: Glocke
- 26: Endabschnitt
- 27, 28: Lager

- 50: Element
- 51: Verbindungsmittel zwischen Kopfstütze und einer Lehne des Fahrzeugsitzes
- 52: Lehne des Fahrzeugsitzes

## Patentansprüche

1. Kopfstütze (200) für einen Fahrzeugsitz mit einer innerhalb der Kopfstütze (200) angeordneten Verstellvorrichtung (100, 100a) zur Verstellung einer Kopfstützenposition,
wobei die Verstellvorrichtung (100, 100a) mindestens eine als Gewindespindel ausgebildete Spindel (10, 10a) und mindestens einen mit der Spindel (10, 10a) in mechanischer Wirkverbindung stehenden Elektromotor (11, 11a) aufweist, wobei der Elektromotor (11, 11a) relativ zur Spindel (10, 10a) beweglich angeordnet ist, derart, dass eine rotatorische Bewegung (14) eines Rotors (12) des Elektromotors (11, 11a) eine translatorische Bewegung (15) des Elektromotors (11, 11a) entlang der Spindel (10, 10a) bewirkt, oder dass die Spindel (10, 10a) relativ zum Elektromotor (11, 11a) beweglich angeordnet ist, derart, dass eine rotatorische Bewegung (14) eines Rotors (12) des Elektromotors (11, 11a) eine translatorische Bewegung (15) der Spindel (10, 10a) bewirkt,
**dadurch gekennzeichnet,**
**dass** der Rotor (12) um die Spindel (10, 10a) herum angeordnet ist, wobei der Rotor (12) fest mit einer Spindelmutter (18) verbunden ist, wobei die Spindelmutter (18) ein in ein Außengewinde (17) der Spindel (10, 10a) eingreifendes Innengewinde (16) aufweist, wobei der Elektromotor (11, 11a) als Außenläufermotor ausgebildet ist und
mittels mindestens einem Lager (27, 28) auf der Spindel (10, 10a) gelagert ist, wobei
um den Rotor (12) herum eine Glocke (25) angeordnet ist, wobei die Glocke (25) fest mit dem Rotor (12) verbunden ist, wobei
die Glocke (25) fest mit der Spindelmutter (18) verbunden ist oder einstückig mit der Spindelmutter (18) ausgebildet ist.

2. Kopfstütze (200) gemäß Anspruch 1, **dadurch gekennzeichnet,**
**dass** eine Steigung (19) eines Außengewindes (17) der Spindel (10, 10a) kleiner als 1,0 mm ist; und / oder
**dass** die Spindel eine Länge (23) von mindestens 10 cm aufweist.

3. Kopfstütze (200) gemäß einem der vorhergehenden Ansprüche, **dadurch gekennzeichnet,**
**dass** der Elektromotor (11, 11a) ein Gehäuse (20) aufweist, wobei auf einer Innenseite des Gehäuses (20) ein Dämmmittel zur Geräuschdämmung angeordnet ist, und / oder wobei das Gehäuse (20) des Elektromotors (11, 11a) Befestigungsmittel (21) zur Befestigung des Elektromotors (11, 11a) mit der Kopfstütze (200) aufweist.

4. Kopfstütze (200) gemäß einem der vorhergehenden Ansprüche, **dadurch gekennzeichnet,**
**dass** ein Stator (13) des Elektromotors (11, 11a) auf einer Leiterplatte (22) des Elektromotors (11, 11a) angeordnet ist; und / oder
**dass** der Elektromotor (11, 11a) mindestens vier, bevorzugterweise mindestens sechs, besonders bevorzugterweise mindestens acht, sowie ganz besonders bevorzugterweise mindestens zehn, Pole aufweist.

5. Kopfstütze (200) gemäß einem der vorhergehenden Ansprüche, **dadurch gekennzeichnet,**
**dass** die Spindel (10, 10a) Kunststoff, vorzugsweise einen thermoplastischen Kunststoff, besonders bevorzugterweise Polyoxymethylen, aufweist oder daraus besteht; und/oder dass die Spindel (10, 10a) selbstschmierend ausgebildet ist.

6. Kopfstütze (200) gemäß einem der vorhergehenden Ansprüche, **dadurch gekennzeichnet,**
**dass** die Verstellvorrichtung (100, 100a) eine Steuereinheit aufweist, wobei die Steuereinheit und der Elektromotor (11, 11a) derart ausgebildet sind, dass eine vollständige Umdrehung des Rotors (12) durch eine Anzahl von 6 bis 18 Impulsen erreicht wird.

7. Kopfstütze (200)
gemäß einem der vorhergehenden Ansprüche, **dadurch gekennzeichnet,**
**dass** der Elektromotor (11, 11a) zur Positionserfassung des Rotors (12) mindestens einen Hall-Sensor, vorzugsweise höchstens 3 Hall-Sensoren, aufweist, welcher beziehungsweise welche zur Positionserfassung eines Rotormagneten des Rotors (12) ausgebildet und im Elektromotor (11, 11a) angeordnet ist beziehungsweise sind, wobei ein Stator (13) des Elektromotors (11, 11a) sowie der mindestens eine Hall-Sensor vorzugsweise auf einer Leiterplatte (22) des Elektromotors (11, 11a) angeordnet sind.

8. Kopfstütze (200) gemäß einem der vorhergehenden Ansprüche, **dadurch gekennzeichnet,**
**dass** die Verstellvorrichtung (100, 100a) eine weitere als Gewindespindel ausgebildete Spindel (10a) und einen mit der weiteren Spindel (10a) in mechanischer Wirkverbindung stehenden weiteren Elektromotor (11a) aufweist.

9. Kopfstütze (200) gemäß einem der Ansprüche 4 bis 8,
**dadurch gekennzeichnet,**
**dass** der Elektromotor (11, 11a) als bürstenloser Motor ausgebildet ist und einen Stator (13) aufweist, wobei zwischen dem Rotor (12) und dem Stator (13) vollumfänglich ein Luftspalt (24) angeordnet ist, wobei der Elektromotor (11, 11a) ein Gehäuse (20) aufweist, welches fest mit dem Stator (13) und/oder der Leiterplatte (22) verbunden ist.

10. Kopfstütze (200) gemäß Anspruch 9,
**dadurch gekennzeichnet,**
**dass** die Spindelmutter (18) Kunststoff, vorzugsweise einen thermoplastischen Kunststoff, besonders bevorzugterweise Polyoxymethylen, aufweist oder daraus besteht; und/oder dass die Spindelmutter (18) selbstschmierend ausgebildet ist.

11. Kopfstütze (200) gemäß einem der vorhergehenden Ansprüche, **dadurch gekennzeichnet,**
**dass** die Glocke (25) einen ersten Außendurchmesser aufweist, wobei die Spindelmutter (18) einen zweiten Außendurchmesser aufweist, wobei der zweite Außendurchmesser über eine gesamte Länge der Spindelmutter (18) kleiner als der erste Außendurchmesser ist, wobei der erste Außendurchmesser vorzugsweise maximal 40 mm beträgt.

12. Kopfstütze (200) gemäß einem der vorhergehenden Ansprüche, **dadurch gekennzeichnet,**
**dass** die Glocke (25) Kunststoff, insbesondere einen thermoplastischen Kunststoff, aufweist oder daraus besteht.

13. Kopfstütze (200) gemäß einem der vorhergehenden Ansprüche, **dadurch gekennzeichnet,**
**dass** die Spindelmutter (18) einen Endabschnitt (26) ohne Innengewinde (16) aufweist, wobei
der Endabschnitt (26) vorzugsweise eine Länge aufweist, welche mindestens 10%, besonders vorzugsweise mindestens 20%, einer Gesamtlänge der Spindelmutter (18) entspricht.

14. Kopfstütze (200) gemäß einem der vorhergehenden Ansprüche,
**dadurch gekennzeichnet,**
**dass** die Verstellvorrichtung (100, 100a) zur Höhenverstellung der Kopfstütze (200) und/oder zur Verstellung einer Neigung der Kopfstütze (200) und/oder zur Verstellung einer Tiefe der Kopfstütze (200) und/oder zur Bewegung eines in der Kopfstütze (200) angeordneten Elements (50) ausgebildet ist.

15. Kopfstütze (200) gemäß einem der vorhergehenden Ansprüche, **dadurch gekennzeichnet,**
**dass** die Kopfstütze (200) zwei Verstellvorrichtungen (100, 100a) aufweist, wobei die erste Verstellvorrichtung (100) zur Höhenverstellung der Kopfstütze (200) innerhalb der Kopfstütze (200) angeordnet ist, wobei die zweite Verstellvorrichtung (100a) zur Verstellung einer Neigung der Kopfstütze (200) und/oder zur Verstellung einer Tiefe der Kopfstütze (200) und/oder zur Bewegung eines in der Kopfstütze (200) angeordneten Elements (50) innerhalb der Kopfstütze (200) angeordnet ist.

## Claims

1. Headrest (200) for a vehicle seat with an adjusting device (100, 100a) arranged inside the headrest (200) for adjusting a headrest position,
wherein the adjusting device (100, 100a) has at least one spindle (10, 10a) configured as a threaded spindle and at least one electric motor (11, 11a) in mechanical operative connection with the spindle (10, 10a), wherein the electric motor (11, 11a) is arranged movably relative to the spindle (10, 10a) in such a way that a rotary movement (14) of a rotor (12) of the electric motor (11, 11a) causes a translational movement (15) of the electric motor (11, 11a) along the spindle (10, 10a), or that the spindle (10, 10a) is arranged movably relative to the electric motor (11, 11a) in such a way that a rotary movement (14) of a rotor (12) of the electric motor (11, 11a) causes a translational movement (15) of the spindle (10, 10a),
**characterized in that**
the rotor (12) is arranged around the spindle (10, 10a), wherein
the rotor (12) is firmly connected to a spindle nut (18), wherein the spindle nut (18) has an internal thread (16) engaging with an external thread (17) of the spindle (10, 10a), wherein the electric motor (11, 11a) is configured as an external rotor motor and is mounted on the spindle (10, 10a) by means of at least one bearing (27, 28),
wherein a bell (25) is arranged around the rotor (12), wherein the bell (25) is firmly connected to the rotor (12), wherein
the bell (25) is firmly connected to the spindle nut (18) or is formed in one piece with the spindle nut (18).

2. Headrest (200) according to claim 1, **characterized in that**
a pitch (19) of an external thread (17) of the spindle (10, 10a) is less than 1.0 mm; and/or
**in that** the spindle has a length (23) of at least 10 cm.

3. Headrest (200) according to one of the preceding claims,
**characterized in that**
the electric motor (11, 11a) has a housing (20), wherein an insulating means for noise insulation is arranged on an inside of the housing (20), and/or wherein the housing (20) of the electric motor (11, 11a) has fastening means (21) for fastening the electric motor (11, 11a) to the headrest (200).

4. Headrest (200) according to one of the preceding claims,
**characterized in that**
a stator (13) of the electric motor (11, 11a) is arranged on a printed circuit board (22) of the electric motor (11, 11a); and/or
**in that** the electric motor (11, 11a) has at least four, preferably at least six, particularly preferably at least eight, and very particularly preferably at least ten, poles.

5. Headrest (200) according to one of the preceding claims,
**characterized in that**
the spindle (10, 10a) has or consists of plastic, preferably a thermoplastic plastic, particularly preferably polyoxymethylene; and / or that the spindle (10, 10a) is configured to be self-lubricating.

6. Headrest (200) according to one of the preceding claims,
**characterized in that**
the adjusting device (100, 100a) has a control unit, wherein the control unit and the electric motor (11, 11a) are configured in such a way that one complete revolution of the rotor (12) is achieved by a number of 6 to 18 pulses.

7. Headrest (200) according to one of the preceding claims,
**characterized in that**
the electric motor (11, 11a) for position detection of the rotor (12) has at least one Hall sensor, preferably at most 3 Hall sensors, which is or are configured for position detection of a rotor magnet of the rotor (12) and is or are arranged in the electric motor (11, 11a), wherein a stator (13) of the electric motor (11, 11a) and the at least one Hall sensor are arranged on a circuit board (22) of the electric motor (11, 11a).

8. Headrest (200) according to one of the preceding claims,
**characterized in that**
the adjusting device (100, 100a) has a further spindle (10a) configured as a threaded spindle and a further electric motor (11a) which is in mechanical operative connection with the further spindle (10a).

9. Headrest (200) according to one of claims 4 to 8, **characterized in that**
the electric motor (11, 11a) is configured as a brushless motor and has a stator (13),
wherein an air gap (24) is arranged between the rotor (12) and the stator (13) over the entire circumference, wherein the electric motor (11, 11a) has a housing (20) which is firmly connected to the stator (13) and / or the circuit board (22).

10. Headrest (200) according to claim 9,
**characterized in that**
the spindle nut (18) has or consists of plastic, preferably a thermoplastic plastic, particularly preferably polyoxymethylene; and / or that the spindle nut (18) is configured to be self-lubricating.

11. Headrest (200) according to one of the preceding claims,
**characterized in that**
the bell (25) has a first outer diameter, wherein the spindle nut (18) has a second outer diameter, wherein, over an entire length of the spindle nut (18); the second outer diameter is smaller than the first outer diameter, wherein the first outer diameter has a maximum of 40 mm.

12. Headrest (200) according to one of the preceding claims,
**characterized in that**
the bell (25) has or consists of plastic, in particular a thermoplastic plastic.

13. Headrest (200) according to one of the preceding claims,
**characterized in that**
the spindle nut (18) has an end section (26) without an internal thread (16), wherein the end section (26) preferably has a length which corresponds to at least 10%, preferably at least 20%, of a total length of the spindle nut (18).

14. Headrest (200) according to one of the preceding claims,
**characterized in that**
the adjusting device (100, 100a) is configured for adjusting the height of the headrest (200) and / or for adjusting an inclination of the headrest (200) and / or for adjusting a depth of the headrest (200) and / or for moving an element (50) arranged in the headrest (200).

15. Headrest (200) according to one of the preceding claims,
**characterized in that**
the headrest (200) has two adjusting devices (100, 100a), wherein the first adjusting device (100) for adjusting the height of the headrest (200) is arranged within the headrest (200), wherein the second adjusting device (100a) for adjusting an inclination of the headrest (200) and / or for adjusting a depth of the headrest (200) and / or for moving an element (50) arranged in the headrest (200) is arranged within the headrest (200).

## Revendications

1. Appuie-tête (200) pour un siège de véhicule, pourvu d'un dispositif d'ajustage (100, 100a) placé à l'intérieur de l'appuie-tête (200), pour l'ajustage d'une position de l'appuie-tête,
le dispositif d'ajustage (100, 100a) comportant au moins une broche (10, 10a) conçue sous la forme de broche filetée et au moins un moteur électrique (11, 11a) qui est en liaison mécanique active avec la broche (10, 10a), le moteur électrique (11, 11a) étant placé de manière mobile par rapport à la broche (10, 10a), de telle sorte qu'un mouvement en rotation (14) d'un rotor (12) du moteur électrique (11, 11a) provoque un mouvement en translation (15) du moteur électrique (11, 11a) le long le long de la broche (10, 10a), ou la broche (10, 10a) étant placée de manière mobile par rapport au moteur électrique (11, 11a), de telle sorte qu'un mouvement en rotation (14) d'un rotor (12) du moteur électrique (11, 11a) provoque un mouvement en translation (15) de la broche (10, 10a),
**caractérisé**
**en ce que** le rotor (12) est placé autour de la broche (10, 10a),
le rotor (12) étant solidement relié avec un écrou (18) de broche, l'écrou (18) de broche comportant un taraudage (16) qui s'engage dans un filetage (17) de la broche (10, 10a),
le moteur électrique (11, 11a) étant conçu sous la forme d'un moteur à induit extérieur et étant logé au moyen d'au moins un roulement (27, 28) sur la broche (10, 10a),
autour du rotor (12) étant placée une cloche (25), la cloche (25) étant solidement reliée avec le rotor (12),
la cloche (25) étant solidement reliée avec l'écrou (18) de broche ou étant conçue en monobloc avec l'écrou (18) de broche.

2. Appuie-tête (200) selon la revendication 1,
**caractérisé**
**en ce qu'**une déclivité (19) d'un filetage (17) de la broche (10, 10a) est inférieur à 1,0 mm ; et/ ou
**en ce que** la broche a une longueur (23) d'au moins 10 cm.

3. Appuie-tête (200) selon l'une quelconque des revendications précédentes,
**caractérisé**
**en ce que** le moteur électrique (11, 11a) comporte un carter (20), sur une face intérieure du carter (20) étant placé un moyen isolant destiné à assurer l'insonorisation et/ou le carter (20) du moteur électrique (11, 11a) comportant des moyens de fixation (21), destinés à fixer le moteur électrique (11, 11a) avec l'appuie-tête (200).

4. Appuie-tête (200) selon l'une quelconque des revendications précédentes,
**caractérisé**
**en ce qu'**un stator (13) du moteur électrique (11, 11a) est placé sur une carte de circuit imprimé (22) du moteur électrique (11, 11a) ; et/ou
**en ce que** le moteur électrique (11, 11a) comporte au moins quatre, de préférence au moins six, de manière particulièrement préférentielle au moins huit, et de manière tout particulièrement préférentielle, au moins 10 pôles.

5. Appuie-tête (200) selon l'une quelconque des revendications précédentes,
**caractérisé**
**en ce que** la broche (10, 10a) comporte une matière plastique, de préférence une matière thermoplastique, de manière particulièrement préférentielle un polyoxyméthylène, ou en est constituée ; et/ou en ce que la broche (10, 10a) est conçue en version autolubrifiante.

6. Appuie-tête (200) selon l'une quelconque des revendications précédentes,
**caractérisé**
**en ce que** le dispositif d'ajustage (100, 100a) comporte une unité de commande, l'unité de commande et le moteur électrique (11, 11a) étant conçus de telle sorte qu'un tour complet du rotor (12) soit atteint par un nombre de 6 à 18 impulsions.

7. Appuie-tête (200) selon l'une quelconque des revendications précédentes,
**caractérisé**
**en ce que** pour détecter la position du rotor (12), le moteur électrique (11, 11a) comporte au moins un capteur à effet Hall, de préférence au maximum 3 capteurs à effet Hall, lequel ou lesquels est ou sont conçu(s) pour détecter la position d'un aimant du rotor (12) et est ou sont placés dans le moteur électrique (11, 11a), un stator (13) du moteur électrique (11, 11a) ainsi que l'au moins un capteur à effet Hall étant placé de préférence sur une carte de circuit imprimé (22) du moteur électrique (11, 11a).

8. Appuie-tête (200) selon l'une quelconque des revendications précédentes,
**caractérisé**
**en ce que** le dispositif d'ajustage (100, 100a) comporte une broche (10a) supplémentaire conçue sous la forme d'une broche filetée et un moteur électrique (11a) supplémentaire qui est en liaison mécanique active avec la broche (10a) supplémentaire.

9. Appuie-tête (200) selon l'une quelconque des revendications 4 à 8,
**caractérisé**
**en ce que** le moteur électrique (11, 11a) est conçu sous la forme d'un moteur sans balai et comporte un stator (13),
entre le rotor (12) et le stator (13) étant placé sur toute la périphérie un entrefer (24), le moteur électrique (11, 11a) comportant un carter (20), lequel est solidement relié avec le stator (13) et/ou avec la carte de circuit imprimé (22).

10. Appuie-tête (200) selon la revendication 9,
**caractérisé**
**en ce que** l'écrou (18) de broche comporte une matière plastique, de préférence une matière thermoplastique, de manière particulièrement préférentielle un polyoxyméthylène, ou en est constitué ; et/ou en ce que l'écrou (18) de broche est conçu en version autolubrifiante.

11. Appuie-tête (200) selon l'une quelconque des revendications précédentes,
**caractérisé**
**en ce que** la cloche (25) présente un premier diamètre extérieur, l'écrou (18) de broche comportant un deuxième diamètre extérieur, sur une longueur totale de l'écrou (18) de broche, le deuxième diamètre extérieur étant inférieur au premier diamètre extérieur, le premier diamètre extérieur étant de préférence d'un maximum de 40 mm.

12. Appuie-tête (200) selon l'une quelconque des revendications précédentes,
**caractérisé**
**en ce que** la cloche (25) comporte une matière plastique, notamment une matière thermoplastique, ou en est constituée.

13. Appuie-tête (200) selon l'une quelconque des revendications précédentes,
**caractérisé**
**en ce que** l'écrou (18) de broche comporte un segment d'extrémité (26) exempt de taraudage (16),
le segment d'extrémité (26) étant de préférence d'une longueur qui correspond à au moins 10 %, de manière particulièrement préférentielle à au moins 20 % d'une longueur totale de l'écrou (18) de broche.

14. Appuie-tête (200) selon l'une quelconque des revendications précédentes,
**caractérisé**
**en ce que** le dispositif d'ajustage (100, 100a) est conçu pour l'ajustage en hauteur de l'appuie-tête (200), et/ou pour l'ajustage d'une inclinaison de l'appuie-tête (200), et/ou pour l'ajustage d'une profondeur de l'appuie-tête (200), et/ou pour le déplacement d'un élément (50) placé dans l'appuie-tête (200).

15. Appuie-tête (200) selon l'une quelconque des revendications précédentes,
**caractérisé**
**en ce que** l'appuie-tête (200) comporte deux dispositifs d'ajustage (100, 100a), le premier dispositif d'ajustage (100) destiné à l'ajustage en hauteur de l'appuie-tête (200) étant placé à l'intérieur de l'appuie-tête (200), le deuxième dispositif d'ajustage (100a) destiné à l'ajustage d'une inclinaison de l'appuie-tête (200) et/ou destiné à l'ajustage d'une profondeur de l'appuie-tête (200) et/ou à déplacer un élément (50) placé dans l'appuie-tête (200) étant placé à l'intérieur de l'appuie-tête (200).
